# EUROPEAN PATENT APPLICATION

(11) **EP 4 014 811 A1**
(43) Date of publication of application: **22.06.2022**
(21) Application number: 20214657.7
(22) Date of filing: 16.12.2020
(51) Int. Cl.: A47J 43/046, A47J 36/16, A47J 36/32, B01F 13/08

(54) **MAGNETIC STIRRER**

(71) Applicant: Electrolux Group Patents, 105 45 Stockholm (SE)
(72) Inventor: KRAUßE, Constantin, 91541 Rothenburg o. d. Tauber (DE)
(74) Representative: Electrolux Group Patents

(57) **Abstract**

The invention relates to a device (1) and a method for processing, preferably stirring and/or mixing, a substance (2) in a container (3) by at least one magnetic tool (4) being movably insertable or being movably inserted in the container (3), the device (1) comprising a worktop (5) for contacting a section of the container (3), preferably at least partially a bottom wall (3B) of the container (3), at a first side (S51) of the worktop (5); at least one actuating unit (6) for generating a magnetic field (MF) for driving the at least one magnetic tool (4), the at least one actuating unit (6) being arranged at a second side (S52) of the worktop (5) opposite to the first side (S51); and a drive unit (7) for rotational and translational driving the at least one actuating unit (6). The invention relates further to a cooking apparatus and an arrangement.

## Description

The present invention relates to a device for processing a substance in a container by at least one magnetic tool being movably insertable or being movably inserted in the container. The present invention relates further to a cooking apparatus with such a device, an arrangement with a cooking apparatus and a method for processing a substance in a container by at least one magnetic tool. The magnetic tool is driven by a rotating magnetic field.

Worktops for processing substances in containers must meet numerous requirements. For example, in the kitchen area, cooking apparatuses with hobs or worktops must be equipped with a variety of functions. In addition to the heat treatment of food in pots, for example, especially the stirring and/or mixing of the food in the pot is an essential part in the course of food preparation.

United States Patent No. US 5,549,382 describes, for example, an apparatus for stirring food in a cooking vessel via an agitator device being inserted in the pot and driven by a rotating driver magnet which is spatially fastened opposite to the pot under the worktop.

Further, United States patent application No. US 2018/0055271 A1 describes a sous-vide cooker that has a spatially fastened magnetic stirring module which is coupled to a magnetic stir bar that is inserted in the inner tank cooking chamber in order to agitate the water for better temperature homogeneity.

United States Patent No. US 10,219,654 B2 describes a combined cooking method to stir and heat food on the basis of magnetic fields by induction cooking. A spatially fastened magnetic stirrer heater is propelled by coils and heated by an induction coil.

The driving concepts known from the prior art for stirring a substance in a container with a magnetic tool in the container by means of a rotating magnetic field have a spatially fastened drive unit so that the magnetic field cannot be spatially changed in its position.

It is hence an object of the invention to provide a device and a method for processing a substance in a container via a magnetic tool according to which a drive unit for generating a rotating magnetic field and thus the magnetic field can be positioned in an optimized manner. It is a further object of the invention to provide a cooking apparatus and an arrangement with such a device.

At least one of the objects is achieved by the device of independent claim 1, the cooking apparatus of claim 13, the arrangement of claim 14 and/or the method of claim 15. Further examples and applications of the invention result from the dependent claims and are explained in the following description with partial reference to the figures.

A first general aspect of the invention relates to a device for processing, preferably stirring and/or mixing, a substance in a container by at least one magnetic tool being movably insertable or being movably inserted in the container, the device comprising: a worktop for contacting a section of the container, preferably at least partially a bottom wall of the container, at a first side of the worktop; at least one actuating unit for generating a magnetic field for driving the at least one magnetic tool, the at least one actuating unit being arranged at a second side of the worktop opposite to the first side; and a drive unit for rotational and translational driving the at least one actuating unit.

The invention provides, for example, a device according to which the magnetic field for driving at least one magnetic tool in a container such as a cooking vessel or a pot can not only be varied with regard to rotational movement, i.e. rotational speed but also with regard to a distance of the magnetic field towards the container and/or the at least one magnetic tool which represents a further degree of freedom or a further adjustment option for optimizing the processing operation of the substance, i.e. food.

It is thus, for example, possible, that permanent magnets may be used for the at least one actuating unit and/or the at least one magnetic tool may vary in terms of size, shape and/or weight. In other words, the at least one actuating unit may be at least one operating unit or preferably at least one generating unit generating the magnetic field.

It is further possible, for example, that due to a translational movement possibility, the magnetic field can be optimally adjusted or is optimally adjustable with respect to the properties of the substance to be processed (such as density, temperature, viscosity or the like) and/or in relation to the at least one magnetic tool.

According to a further aspect of the invention, the drive unit may be configured to or adapted to control the rotational movement of the at least one actuating unit around a rotation axis and to control the translational movement of the at least one actuating unit with reference to or towards the worktop, preferably with reference to the at least one magnetic tool being movably inserted in the container, to adjust, preferablyin accordance with at least one predetermined und/or measured parameter, the magnetic field between the at least one actuating unit and the at least one magnetic tool.

Controlling may, for example, comprise continuously variably adjusting or stepped adjusting the rotational movement and/or preferably the translational movement of the at least one actuating unit.

This allows, for example, that the magnetic field can be optimally adapted to different requirements or framework conditions.

This further allows, for example, that the cooktop remains not permanently magnetic and thus increases safety. Next, fracture of the worktop due to placing magnetic cookware is, for example, avoided.

According to a further aspect of the invention, the drive unit may comprise a motor, preferably an electric motor, for rotational driving the at least one actuating unit, the motor being preferably releasably coupled to the at least one actuating unit. In other words, the motor can be operatively connected with the at least one actuating unit.

This allows, for example, that the motor can be removed and repaired in case of damage or in case of service very easy.

According to a further aspect of the invention, the drive unit can comprise an actuator, preferably an electromechanical actuator or a linear actuator, for translational driving the at least one actuating unit in at least one direction, preferably in direction of the worktop.

This allows, for example, an optimized adjustment and/or operation of the magnetic field, for example generated by rotating permanent magnets, with regard to its position and thus the magnetic field strength.

According to a further aspect of the invention, the actuator may comprise at least one spindle drive assembly and/or at least one scissor linkage assembly for translational driving the at least one actuating unit, the at least one spindle drive assembly and/or the at least one scissor linkage assembly may be driven by at least one motor, preferably by at least one electric motor.

This allows, for example, a very precise adjustment of the position of the magnetic field by a means of a robust and compactly designed actuator.

According to a further aspect of the invention, the device can comprise at least one guidance element for translational guiding at least a section of the at least one actuating unit, the at least one guidance element being preferably arranged or mounted on the worktop at the second side.

This allows, for example, an improved bearing of the rotating at least one actuating unit, preferably during translational movement additionally.

According to a further aspect of the invention, the at least one guidance element may comprise a guide rail formed as a slide rail or formed as a ball bearing rail.

According to a further aspect of the invention, the device can comprise at least one heating element for heating at least partially the substance in the container, the at least one heating element may be arranged on the worktop or integrated at least partially in the worktop, preferably on the outer circumference of the worktop or at least beyond the projection screen of the at least one actuating unit on the worktop.

This allows, for example, that the substance in the container such as food in a pot or in a cooking vessel can additionally be subjected to heat treatment.

In addition, it is possible that the magnetic field and thus the strength of the magnetic field will not be disturbed significantly by the at least one heating element since it is positioned outside the projection area of the at least one actuating element.

According to a further aspect of the invention, the device may comprise at least one sensor element for determining a temperature of the substance, a magnetic field strength of the magnetic field at least on the worktop at the second side, the presence of the container with the substance and/or of the at least one magnetic tool, a position of the container with the substance with reference to the worktop, a distance between the at least one actuating unit and the worktop, and/or a rotational speed of the at least one actuating unit, the at least one sensor element being preferably arranged on the worktop or integrated at least partially in the worktop.

This allows, for example, a control of the at least one actuating unit and thus the at least one magnetic tool by the drive unit in a closed-loop configuration as described in further detail herein. Further, it is possible that the device with its components and elements can be monitored accordingly.

According to a further aspect of the invention, the device, preferably the drive unit, can comprise a control unit for controlling at least one motor and/or an actuator of the drive unit to adjust the magnetic field in accordance with at least one determined and/or predefined parameter, the at least one determined and/or predefined parameter comprises a temperature of the substance, a magnetic field strength of the magnetic field at least on the worktop at the second side, the presence of the container with the substance and/or of the at least one magnetic tool, a position of the container with the substance with reference to the worktop, a distance between the at least one actuating unit and the worktop, and/or a rotational speed of the at least one actuating unit.

According to a further aspect of the invention, the worktop may comprise a magnetic field pervasive material, preferably comprises at least glass ceramic material.

This allows, for example, that the magnetic field and thus the magnetic field strength will not be disturbed or weakened significantly.

According to a further aspect of the invention, the at least one actuating unit can comprise at least one permanent magnet.

It is possible that the at least one actuating unit comprises multiple permanent magnets in order to increase the quality and thus the magnetic field strength for driving the at least one magnetic tool.

A second general aspect of the invention relates to a cooking apparatus with at least one device as disclosed herein.

A third general aspect of the invention relates to an arrangement with a cooking apparatus as disclosed herein, a container with a substance to be processed by at least one magnetic tool being movably inserted in the container, wherein the at least one magnetic tool preferably comprises least a ferromagnetic material and/or is formed at least partially prism-shaped.

A third general aspect of the invention relates to a method for processing, preferably stirring and/or mixing, a substance in a container by at least one magnetic tool being movably inserted in the container, preferably by a device as disclosed herein, the method comprising:
Providing the container with the substance and the movably inserted at least one magnetic tool in the container on a worktop at a first side of the worktop;
Generating a magnetic field by at least one actuating unit for driving the at least one magnetic tool, the at least one actuating unit being arranged at a second side of the worktop opposite to the first side;
Translationally driving the at least one actuating unit with reference to the worktop by a drive unit;
Adjusting the magnetic field between the at least one actuating unit and the at least one magnetic tool, preferably until at least one determined and/or predefined parameter is reached or is fulfilled;
Processing, preferably stirring and/or mixing, the substance by the at least one magnetic tool.

According to a further aspect of the invention, the method may further comprise:
Rotationally driving the at least one actuating unit by the drive unit;
Controlling the rotational movement of the at least one actuating unit by the drive unit, preferably by a control unit of the drive unit and/or
Controlling the translational movement of the at least one actuating unit with reference to the worktop, preferably with reference to the at least one magnetic tool, preferably by a control unit of the drive unit.

According to a further aspect of the invention, controlling the rotational movement and/or controlling the translational movement of the at least one actuating unit can comprise: Determining and/or predefining at least one parameter, the at least one parameter comprising a temperature of the substance, a magnetic field strength of the magnetic field at least on the worktop at the second side, the presence of the container with the substance and/or the at least one magnetic tool, a position of the container with the substance with reference to the worktop, a distance between the at least one actuating unit and the worktop, and/or a rotational speed of the at least one actuating unit.

According to a further aspect of the invention, the method may further comprise:
Checking the presence of the container with the substance and/or
the at least one magnetic tool and/or the position of the container with the substance with reference to the worktop, preferably before rotationally and/or translationally driving the at least one actuating unit.

In order to avoid repetition, features which are directed to the method according to the invention and/or disclosed in connection therewith should also be considered as disclosed according to the device and be claimable and vice versa.

The previously described examples and features of the invention can be combined with each other in any way.

Further or other details and advantageous effects of the invention are described in more detail below with reference to the attached figures:
- Fig. 1: illustrates schematically a first example of the device according to the invention;
- Fig. 2: illustrates schematically a second example of the device according to the invention;
- Fig. 3: illustrates schematically a third example of the device according to the invention
- Fig. 4: illustrates a flowchart of an example of the method according to the invention.

Identical or functionally equivalent components or elements are marked or labeled in the figures with the same reference signs. For their explanation, reference is also made to the description of other examples and/or figures in order to avoid repetition.

The following detailed description of the examples shown in the figures serves as a closer illustration or exemplification and is in no way intended to limit the scope of the invention.

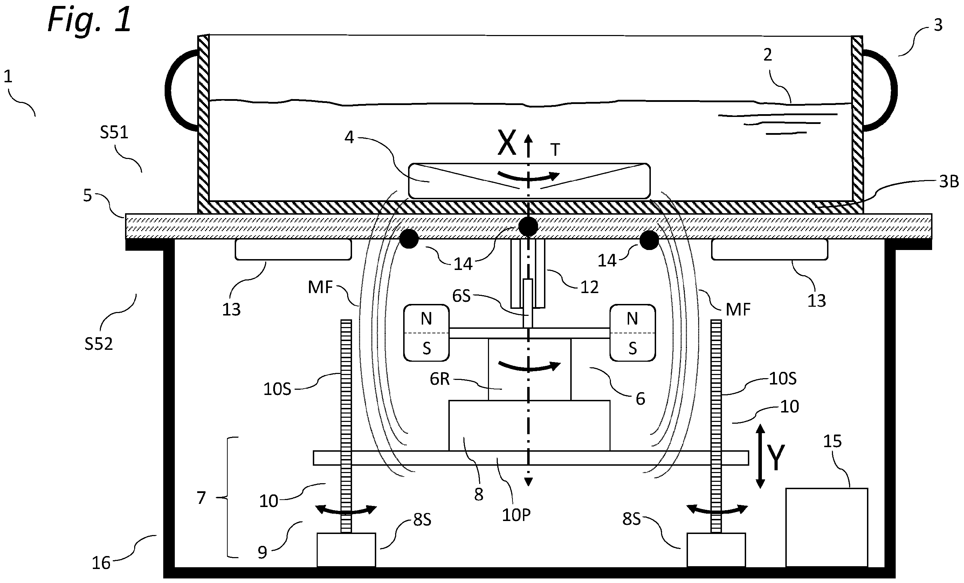

Figure 1 illustrates schematically a first example of the device 1 or at least a section of the device 1 according to the invention. The device 1 can be preferably a hob or a cooktop with at least one worktop 5 and/or cooking zone 5 and is provided for processing a substance 2 in a container 3 as described in further detail below. The device 1 can be preferably part of a cooking apparatus (not shown in the figures for the sake of clarity).

The worktop 5 comprises a magnetic field pervasive material, preferably comprises at least glass ceramic material. The worktop 5 is formed preferably flat and/or plate-shaped such that a container 3 can be placed on the worktop 5 at a first side S51. In detail, the worktop 5 is configured for contacting a section of the container 3, preferably at least partially a bottom wall 3B of the container 3, at the first side S51 of the worktop 5.

The container 3 can be, for example, a cooking vessel 3 or a pot 3 as known from the prior art. The container 3 includes a substance 2 to be processed such as food 2 to be at least stirred and/or mixed in the course of food preparation. The container 3, i.e. the cooking vessel 3 or pot 3 can be made for example at least of a metallic material, and/or a plastic material comprising a thermoplastic material such as preferably polytetrafluoroethylene.

At least one magnetic tool 4 is configured to be movably insertable or is movably inserted in the container 3, i.e. inside the container 3, to get inter alia in contact with the substance 2 in order to process the substance 2 accordingly.

The magnetic tool 4 can be a stirring tool 4 and/or a mixing tool 4. The magnetic tool 4 can comprise at least partially a solid and/or a hollow body. The magnetic tool 4 can further comprise at least partially a cylindrical and/or a rod-shaped configuration. It is possible that the magnetic tool 4 comprises shovel sections and/or knife sections in order to stir and/or mix the substance 2 such as food accordingly. The magnetic tool 4 can be formed at least partially prism-shaped.

The magnetic tool 4 comprises at least a ferromagnetic material to be driven by a magnetic field MF, preferably to be driven rotationally. The ferromagnetic material may be preferably iron or at least an iron alloy. It is possible that several magnetic tools 4 of corresponding design or configuration can be movably inserted or are movably inserted in the container 3.

The device 1 can further comprise a frame unit 16 for carrying and/or accommodation further components and elements as described in further detail below. The frame unit 16 may be a separate and/or interchangeable frame unit 16 which is preferably releasably connected or can be connected to the worktop 5, for example via at least one bolt (not shown in the figures for the sake of clarity). The frame unit 16 can be at least plate-shaped and preferably formed with bracing elements. The frame unit 16 can further serve as a protective element for the components and elements inside the frame unit 16.

The device 1 further comprises at least one actuating unit 6 for generating or providing a magnetic field MF for driving the at least one magnetic tool 4. The actuating unit 6 is arranged at a second side S52 of the worktop 5 opposite to the first side S51. The actuating unit 6 is arranged preferably in the frame unit 16. The actuating unit 6 can comprise at least one permanent magnet. Preferably, the actuating unit 6 comprises a plurality of permanent magnets in order to optimally drive at least one magnetic tool 4 being movably inserted in a container 3 in order to stir and/or mix food 2 in the container 3. Via the rotating magnetic field, a torque T is induced in the at least one magnetic tool 4 to drive the at least one magnetic tool 4 rotationally. The at least one permanent magnet may be arranged on a rotor 6R of the actuating unit 6

Further, the device 1 comprises a drive unit 7 for rotational and translational driving the at least one actuating unit 6. In other words, the actuating unit 6 is configured for connection with a drive unit 7 of the device 1.

The drive unit 7 is configured to control, preferably via a closed-loop configuration with a control unit 15, the rotational movement of the at least one actuating unit 6 around a rotation axis X and to control the translational movement of the at least one actuating unit 6 with reference to the worktop 5, preferably with reference to the at least one magnetic tool 4 being movably inserted in the container 3, to adjust the magnetic field MF between the at least one actuating unit 6 and the at least one magnetic tool 4 which is primarily a rotating magnetic field MF and secondly can be varied in terms of its magnetic field strength via translational movement of the actuating unit 6.

In other words, the drive unit 7 drives the actuating unit 6 not only rotationally around rotation axis X but also (linearly) translationally along the Y axis towards the worktop 5 or away from the worktop 5 depending on the magnetic field strength required.

With regard to rotational driving the actuating unit 6 or at least the rotor 6R of the actuating unit 6, the drive unit 7 comprises a motor 8. The motor 8 is preferably an electric motor such as a brushless DC electric motor. The motor 8 is releasably coupled to the actuating unit 6.

The drive unit 7 and preferably the motor 8 of the drive unit 7 driving the actuating unit 6 with regard to rotational movement is preferably variably adjustable with regard to rotational speed [rpm] of at least a part of the actuating unit 6, i.e. the rotor 6R, comprising the at least one permanent magnet.

As regards translational movement of the actuating unit 6 along the Y axis, the drive unit 7 comprises an actuator 9, preferably an electromechanical actuator 9, for translational driving the actuating unit 6 in at least one direction of the Y axis, preferably in direction Y being essentially perpendicular to the worktop 5.

The actuator 9 of the drive unit 7 may be preferably configured to provide a step less and/or continuous translational movement from a first position to a second position.

The actuator 9 as illustrated schematically in the example of figure 1 comprises two spindle drive assemblies 10 with each a spindle 10S (spindle rod) and a motor 8S for driving the spindle 10S.

The motors 8S of the two spindles 10S are synchronized and coordinated with each other, i.e. controlled accordingly such that they run essentially in parallel. The spindles 10S are set in rotation by the motors 8S and drive a platform 10P that carries the motor 8 and the actuating unit 6.

Depending on the direction of rotation of the motors 8S of the spindles 10S, the actuating unit 6 moves translationally towards the cooktop 5 or away from the cooktop 5 in direction of the Y axis via the platform 10P.

In order to achieve preferably an optimally supported rotational and translational movement of the actuating unit 6, the device 1 may further comprise at least one guidance element 12 for translational guiding at least a section 6S of the actuating unit 6.

The guidance element 12 can be arranged on the cooktop 5 at the second side S52 of the cooktop 5 and can comprise a guide rail 12 and/or a guide frame 12 that accommodates at least a section 6S of the actuating unit 6, preferably at least a section 6S of the rotor 6R, in more or less a form-fit manner and with an appropriate bearing, for example a plain bearing. It is thus possible that the guide rail 12 is thus formed as a slide rail. It is alternatively also possible that the at least one guidance element 12 comprises a guide rail 12 which is formed as a ball bearing rail.

This allows, for example, a safer guidance of the actuating unit 6 during a rotational and translational movement of the actuating unit 6 being driven by the motor 8 rotationally and the spindle drive assembly 10 translationally.

The device 1 may further comprise at least one heating element 13 for heating, i.e. warming up at least partially the substance 2 in the container 3. The at least one heating element 13 may be, for example, a heating coil or a spiral-wound filament or the like which can be adjustably operated by means of electric current in order to provide inductively generated eddy currents for cooking the substance 2 in the container 3.

The at least one heating element 13 is arranged on the worktop 5 at the second side S52 of the worktop 5 and/or is integrated at least partially in the worktop 5. The at least one heating element 13 can be arranged preferably on the outer circumference of the worktop 5 and thus defines an edge area or an edge region of a cooking zone of the worktop 5. The at least one heating element 13 can be arranged on the worktop 5 at least beyond the projection screen or projection area of the at least one actuating unit 6 on the worktop 5. This allows, for example, that the magnetic field MF of the actuating unit 6 is not disturbed or at least weakened by the at least one heating element 13.

The device 1 further comprises at least one sensor element 14 or preferably multiple sensor elements 14. Some of the multiple sensor elements 14 as illustrated in figure 1 may be arranged on the cooktop 5, preferably at the second side S52 of the cooktop 5. It is possible that at least one sensor element 14 is integrated at least partially in the worktop 5.

At least one sensor element 14 can be configured for determination of at least an average temperature of the substance 2 to be processed. It is also possible that the at least one sensor element 14 may be configured to determine the strength of the magnetic field MF at least on the worktop 5 and preferably on the outer surface of the worktop 5 at the second side S52.

It is also possible that at least one sensor element 14 may be configured to determine the presence of a container 2 and/or preferably at least one magnetic tool 4 being movably inserted in the container 2.

It is also possible that the presence of a container 2 can be determined by properties or change of properties of a resonant circuit or by at least one sensor element 14 in the form of an inductive sensor element 14 being part of a resonant circuit.

It is also possible that the at least one sensor element 14 may be configured to determine the position of the container 3 with the substance 2 with reference to the worktop 5 and/or a distance between the at least one actuating unit 6, preferably at least one permanent magnet of the actuating unit 6, and the worktop 5, preferably the outer surface of the worktop 5 at the second side S52.

It is also possible that at least one sensor element 14 may be configured to determine a rotational speed [rpm] of the at least one actuating unit 6 and/or the at least one magnetic tool 4.

The at least one sensor element 14 or preferably the multiple sensor elements 14 are in signal communication inter alia with the control unit 15 in order provide a control of closed-loop configuration. The control unit 15 will be described in further detail below.

The control unit 15 as part of the device 1 or preferably the drive unit 7 is configured to control at least one motor 8 of at least one actuating unit 6 and/or at least one motor 8S of the actuator 9 of the drive unit 7 und thus the spindle drive assembly 10 to variably adjust the magnetic field MF in accordance with at least one determined and/or predefined parameter within a closed-loop control configuration.

The at least one determined and/or predefined parameter can preferably comprise an average temperature of the substance 2 such as food and/or a magnetic field strength of the magnetic field MF at least on the worktop 5 at the second side S52.

The at least one determined and/or predefined parameter can preferably further comprise an information regarding the presence of the container 3 with the substance 2 and/or the at least one magnetic tool 4, a position of the container 3 with the substance 2 with reference to the worktop 5, a distance between the at least one actuating unit 6 and the worktop 5, and/or a rotational speed [rpm] of the at least one actuating unit 6, i.e. the rotor 6R of the at least one actuating unit 6 with the at least on permanent magnet and/or the at least one magnetic tool 4.

The control unit 15 can preferably be an (electronic) computing device with known components and elements of internal hardware units such as at least one central processing unit (CPU) being configured to perform calculations and logic operations required to execute a computer program in order to control the at least one drive unit 7, at least one random access memory unit(RAM) for temporary storage of data and/or information, at least one input/output unit for signal communication, at least one energy supply unit, etc. (not shown in the figures for the sake of clarity).

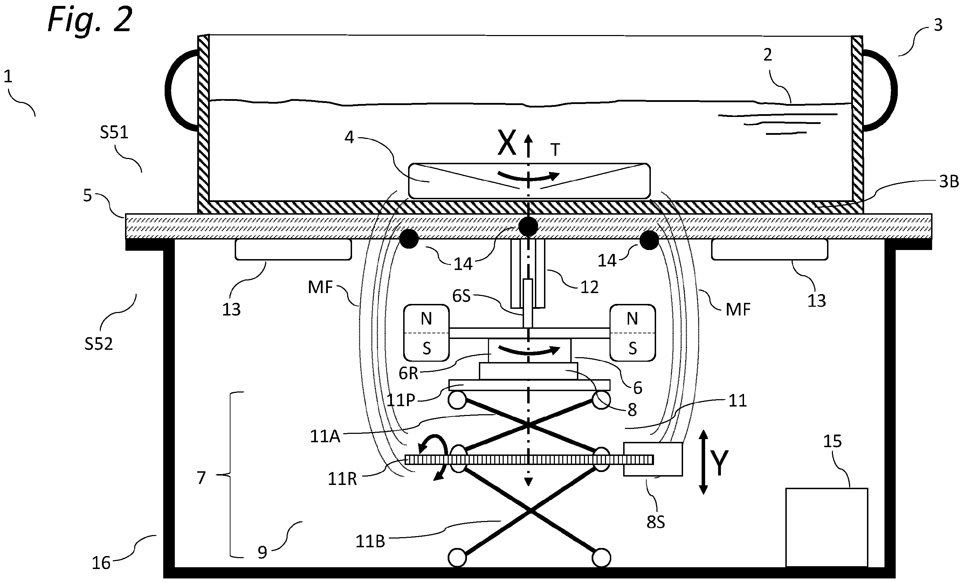

Figure 2 illustrates schematically a second example of the device 1 according to the invention.

The description of components and elements in figure 2 which are already illustrated in figure 1 is omitted to avoid repetition.

The example of the device 1 as illustrated in figure 2 is identical to the example of the device 1 as illustrated in figure 1 with the exception of the drive unit 7 and in particular the actuator 9 for the translational movement of the actuating unit 6.

Instead of two spindle drive assemblies 10, the actuator 9 comprises a scissor linkage assembly 11 with two scissor link units 11A, 11B. The first scissor link unit 11A and the second scissor link unit 11B are connected to each other via threaded rod 11R by means of joints or hinges (not further illustrated in figure 2). The threaded rod 11R is driven by a motor 8S of the scissor link assembly 11.

The first scissor link unit 11A is pivotally connected to a platform 11P via joints or hinges. A motor 8 for rotationally driving the actuating unit 6 is arranged together with the actuating unit 6 on the platform 11P. Depending on the rotation of the threaded rod 11R, the scissor link units 11A, 11B either move together or apart from each other in the direction of the threaded rod 11 but thus drive translationally the motor 8 with the actuating unit 6 in the direction of the worktop 5 or in the opposite direction along the Y axis, accordingly.

A translational movement of the magnetic field MF and thus a variably adjustable magnetic field strength of the magnetic field MF can be provided to the at least one magnetic tool 4 inside the container 3 in order to induce a torque T and to put the magnetic tool 4 in the container 3 in a rotational movement, i.e. to drive the magnetic tool 4.

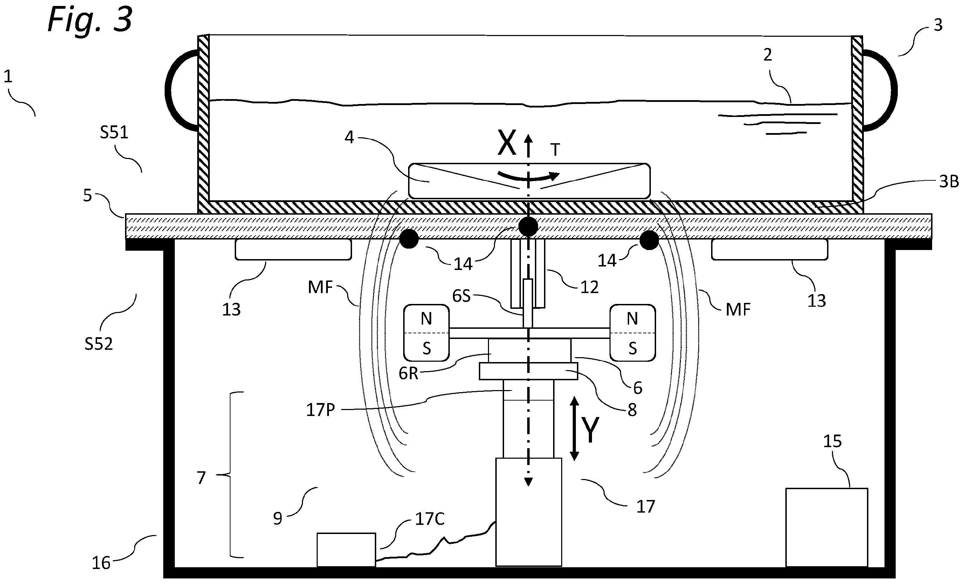

Figure 3 illustrates schematically a third example of the device 1 according to the invention.

The description of components and elements in figure 3 which are already illustrated in figure 1 is omitted to avoid repetition.

The example of the device 1 as illustrated in figure 3 is identical to the example of the device 1 as illustrated in figure 1 with the exception of the drive unit 7 an in particular the actuator 9 for the translational movement of the actuating unit 6.

Instead of a scissor linkage assembly 11, the actuator 9 comprises a lifting cylinder 17. The lifting cylinder 17 comprises a platform 17P carrying the motor 8 and the actuating unit 6. The lifting cylinder 17 may be configured as a hydraulic cylinder or as a pneumatic cylinder which is controlled, preferably by the control unit 15, by means of a pump 17C for the respective medium liquid or gas.

Again, the magnetic field MF induces a torque T, preferably in dependence of the distance of the actuating unit 6 to the worktop 5 and/or at least the at least one magnetic tool 4 to drive the at least one magnetic tool 4 in order to process, preferably stir and/or mix, the substance 2 such as food being in the container 3.

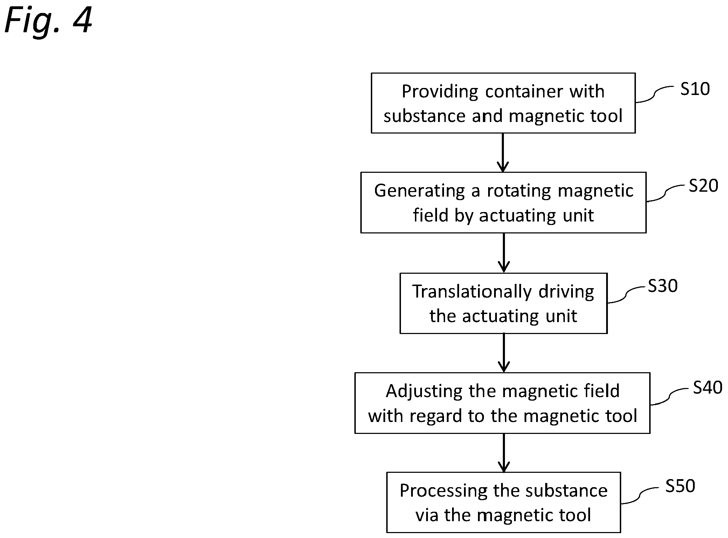

Figure 4 illustrates a flowchart of an example of the method according to the invention.

Focus is now put on an example of the method according to the invention. Components and elements for executing or performing the method being referred to step rather into the background as they are already described above on the basis of the illustrations in figures 1 to 3.

For the sake of clarity, only main phases of the example of the method are illustrated in the flowchart in figure 4

In phase S10, the method can be initiated by providing a container 3 (pot, cooking vessel) with a substance 2 (food) and at least one magnetic tool 4 on a worktop 5 of a device 1 as disclosed herein, the device 1 may be part of a cooking apparatus for example. The at least one magnetic tool 4 is movably inserted in the container 3 and can rotate at the bottom wall 3B of the container 3 around rotation axis X.

The actuating unit 6 of the device 1 with its at least one permanent magnet or preferably multiple permanent magnets generates a magnetic field MF of corresponding magnetic field strength. The actuating unit 6 can be positioned at a predetermined distance from or towards the worktop 5.

A user of the cooking apparatus requests, for example via a graphical user interface such as a touchscreen or the like (not shown in the figures for the sake of clarity), that the substance 2 in the container 3 shall be processed, preferably stirred and/or mixed. It is further possible that the substance 2 can be subjected to a heat treatment by at least one heat element 13.

The graphical user interface may transmit at least one signal to the control unit 15 of the device 1. It is also possible that information for such at least one signal is retrieved or recovered from an electronic data base and/or a computer program, preferably being performed or executed on the control unit 15. The control unit 15 causes the drive unit 7 and thus the motor 8 to rotationally drive the actuating unit 6, i.e. the rotor 6R of the actuating unit 6, with the multiple permanent magnets. Thus, a rotating magnetic field MF is generated in phase S20. The rotating magnetic field MF induces a torque T in the at least one magnetic tool 4 and thus drives the at least one magnetic tool 4 in a rotational movement state in order to process the substance 2 accordingly.

At least one sensor element 14 detects the magnetic field strength of the magnetic field MF on the outer surface of the worktop 5 at the second side S52. A further sensor element 14 detects the rotational speed [rpm] of the rotor 6R of the actuating unit 6 and thus the rotational speed [rpm] of the magnetic field MF. A further sensor 14 detects the position of the actuating unit 6 with reference to or towards the worktop 5.

Each information can be processed accordingly by the control unit 15 which is in signal communication with the sensor elements 14. At least one parameter can be generated and/or be determined and/or predefined from it in order to adjust the position of the actuating unit 6 by translationally driving the actuating unit 6 in phase S30 and thus adjusting the magnetic field MF with regard to the at least one magnetic tool 4 in phase S40.

With the newly adjusted magnetic field MF of correspondingly adjusted magnetic field strength with regard to the at least one magnetic tool 4, the substance 2 can be processed accordingly as desired in phase S50.

With the method according to the invention, it is further possible that especially not properly placed containers 3 on the worktop 5 can be detected and thus adjust the magnetic field MF accordingly via preferably translational movement of the at least one actuating unit 6 with the at least one permanent magnet.

It is understood that the components and elements as described above are configured for connection to each other, preferably for signal communication which may comprise a wired and/or a wireless signal communication.

It is possible that the method according to the invention can be preferably at least partially a computer-implemented method to perform at least the translationally driving of the at least one actuating unit 6 by the drive unit 7 with reference to the worktop 5.

The invention is not limited to the examples described above. Rather, a large number of variants and modifications are possible, which also make use of the inventive idea and therefore fall within the scope of protection.

The invention can be realized at least partially in hardware and/or software and can be transferred to or realized with several physical products, i.e. apparatuses and/or devices.

The invention can be at least partially transferred to at least one computer program product as regards preferably the method or at least partially the method according to the invention.

Preferably, the invention also claims protection for the subject matter and the features of the sub-claims independently of the claims referred to.

### List of reference signs

- 1: device
- 2: substance/food
- 3: container/pot/cooking vessel
- 3B: bottom wall of the container
- 4: magnetic tool
- 5: worktop/cooking zone
- 6: actuating unit
- 6R: rotor of the actuating unit
- 6S: section of the actuating unit
- 7: drive unit
- 8: motor/electric motor
- 8S: motor/electric motor
- 9: actuator
- 10: spindle drive assembly
- 10P: platform
- 10S: spindle
- 11: scissor link assembly
- 11A: first scissor link unit
- 11B: second scissor link unit
- 11P: platform
- 11R: threaded rod
- 12: guidance element/guide frame/guide rail
- 13: heating element
- 14: sensor element
- 15: control unit
- 16: frame unit
- 17: lifting cylinder
- 17C: pump
- 17P: platform

- MF: magnetic field
- S51: first side of the worktop/cooking zone
- S52: second side of the worktop/cooking zone
- T: torque
- X: rotation axis
- Y: axis

## Claims

1. A device (1) for processing, preferably stirring and/or mixing, a substance (2) in a container (3) by at least one magnetic tool (4) being movably insertable or being movably inserted in the container (3), the device (1) comprising:
a worktop (5) for contacting a section of the container (3), preferably at least partially a bottom wall (3B) of the container (3), at a first side (S51) of the worktop (5) ;
at least one actuating unit (6) for generating a magnetic field (MF) for driving the at least one magnetic tool (4), the at least one actuating unit (6) being arranged at a second side (S52) of the worktop (5) opposite to the first side (S51); and
a drive unit (7) for rotational and translational driving the at least one actuating unit (6).

2. The device (1) according to claim 1,
wherein the drive unit (7) is configured to control the rotational movement of the at least one actuating unit (6) around a rotation axis (X) and to control the translational movement of the at least one actuating unit (6) with reference to the worktop (5), preferably with reference to the at least one magnetic tool (4) being movably inserted in the container (3), to adjust the magnetic field (MF) between the at least one actuating unit (6) and the at least one magnetic tool (4).

3. The device (1) according to claim 1 or 2,
wherein the drive unit (7) comprises a motor (8), preferably an electric motor (8), for rotational driving the at least one actuating unit (6), the motor (8) being preferably releasably coupled to the at least one actuating unit (6).

4. The device (1) according to any one of the previous claims,
wherein the drive unit (7) comprises an actuator (9), preferably an electromechanical actuator (9), for translational driving the at least one actuating unit (6) in at least one direction (Y), preferably in direction (Y) of the worktop (5).

5. The device (1) according to claim 4,
wherein the actuator (9) comprises at least one spindle drive assembly (10) and/or at least one scissor linkage assembly (11) for translational driving the at least one actuating unit (6), the at least one spindle drive assembly (10) and/or the at least one scissor linkage assembly (11) being driven by at least one motor (8S), preferably by at least one electric motor (8S).

6. The device (1) according to any one of the previous claims,
wherein the device (1) comprises at least one guidance element (12) for translational guiding at least a section (6S) of the at least one actuating unit (6), the at least one guidance element (12) being preferably arranged on the worktop (5) at the second side (S52).

7. The device (1) according to claim 6,
wherein the at least one guidance element (12) comprises a guide rail formed as a slide rail or formed as a ball bearing rail.

8. The device (1) according to any one of the previous claims,
wherein the device (1) comprises at least one heating element (13) for heating at least partially the substance (2) in the container (3), the at least one heating element (13) being arranged on the worktop (5) or integrated at least partially in the worktop (5), preferably on the outer circumference of the worktop (5) or at least beyond the projection screen of the at least one actuating unit (6) on the worktop (5).

9. The device (1) according to any one of the previous claims,
wherein the device (1) comprises at least one sensor element (14) for determining a temperature of the substance (2), a magnetic field strength of the magnetic field (MF) at least on the worktop (5) at the second side (S52), the presence of the container (3) with the substance (2), a position of the container (3) with the substance (2) with reference to the worktop (5), a distance between the at least one actuating unit (6) and the worktop (5), and/or a rotational speed of the at least one actuating unit (6), the at least one sensor element (14) being preferably arranged on the worktop (5) or integrated at least partially in the worktop (5).

10. The device (1) according to any one of the previous claims,
wherein the device (1), preferably the drive unit (7), comprises a control unit (15) for controlling at least one motor (8) and/or an actuator (9) of the drive unit (7) to adjust the magnetic field (MF) in accordance with at least one determined and/or predefined parameter, the at least one determined and/or predefined parameter comprises a temperature of the substance (2), a magnetic field strength of the magnetic field (MF) at least on the worktop (5) at the second side (S52), the presence of the container (3) with the substance (2), a position of the container (3) with the substance (2) with reference to the worktop (5), a distance between the at least one actuating unit (6) and the worktop (5), and/or a rotational speed of the at least one actuating unit (6).

11. The device (1) according to any one of the previous claims,
wherein the worktop (5) comprises a magnetic field pervasive material, preferably comprises at least glass ceramic material.

12. The device (1) according to any one of the previous claims,
wherein the at least one actuating unit (6) comprises at least one permanent magnet (6M).

13. A cooking apparatus with at least one device (1) according to any one of the previous claims.

14. An arrangement with a cooking apparatus according to claim 13, a container (3) with a substance (2) to be processed by at least one magnetic tool (4) being movably inserted in the container (3), wherein the at least one magnetic tool (4) preferably comprises least a ferromagnetic material and/or is formed at least partially prism-shaped.

15. A method for processing, preferably stirring and/or mixing, a substance (2) in a container (3) by at least one magnetic tool (4) being movably inserted in the container (3), preferably by a device (1) according to any one of the previous claims 1 to 12, the method comprising:
• Providing the container (3) with the substance (2) and the movably inserted at least one magnetic tool (4) in the container (3) on a worktop (5) at a first side (S51) of the worktop (5);
• Generating a magnetic field (MF) by at least one actuating unit (6) for driving the at least one magnetic tool (4), the at least one actuating unit (6) being arranged at a second side (S52) of the worktop (5) opposite to the first side (S51);
• Translationally driving the at least one actuating unit (6) with reference to the worktop (5) by a drive unit (7) ;
• Adjusting the magnetic field (MF) between the at least one actuating unit (6) and the at least one magnetic tool (4), preferably until at least one determined and/or predefined parameter is reached or is fulfilled;
• Processing, preferably stirring and/or mixing, the substance (2) by the at least one magnetic tool (4).

16. The method according to claim 15, further comprising:
• Rotationally driving the at least one actuating unit (6) by the drive unit (7);
• Controlling the rotational movement of the at least one actuating unit (6) by the drive unit (7), preferably by a control unit (15) of the drive unit (7) and/or
• Controlling the translational movement of the at least one actuating unit (6) with reference to the worktop (5), preferably with reference to the at least one magnetic tool (4), preferably by a control unit (15) of the drive unit (7).

17. The method according to claim 16,
wherein controlling the rotational movement and/or controlling the translational movement of the at least one actuating unit (6) comprises:
• Determining and/or predefining at least one parameter, the at least one parameter comprising a temperature of the substance (2), a magnetic field strength of the magnetic field (MF) at least on the worktop (5) at the second side (S52), the presence of the container (3) with the substance (2), a position of the container (3) with the substance (2) with reference to the worktop (5), a distance between the at least one actuating unit (6) and the worktop (5), and/or a rotational speed of the at least one actuating unit (6).

18. The method according to any one of the preceding claims 15 to 17, further comprising:
• Checking the presence of the container (3) with the substance (2) and/or the position of the container (3) with the substance (2) with reference to the worktop (5), preferably before rotationally and/or translationally driving the at least one actuating unit (6).
